# EUROPEAN PATENT SPECIFICATION

(11) **EP 3 901 451 B1**
(45) Date of publication and mention of the grant of the patent: **07.06.2023**
(21) Application number: 20170515.9
(22) Date of filing: 21.04.2020
(51) Int. Cl.: F03D 1/06

(54) **WIND TURBINE BLADE INSTALLATION**
WINDTURBINENSCHAUFELINSTALLATION
INSTALLATION DE PALE D'ÉOLIENNE

(43) Date of publication of application: 27.10.2021
(73) Proprietor: Vestas Wind Systems A/S, 8200 Aarhus N (DK)
(72) Inventor: MADSEN, Axel Peter, 9900 Frederikshavn (DK); OLSEN, Anders, 8500 Grenaa (DK)
(74) Representative: Vestas Patents Department

(56) References cited:
- EP-A2- 2 279 345
- WO-A2-2011/095167
- JP-U- H0 351 182
- KR-B1- 101 324 962

## Description

### Technical field

The present disclosure relates to a device for use when installing wind turbine blades on a hub of a wind turbine. The present disclosure also relates to a method for installing wind turbines blades and to a wind turbine blade installation arrangement.

### Background

Wind turbines are normally provided with a rotor in the form of a rotatable hub carrying a set of wind turbine blades. The wind acts on the wind turbine blades, thereby causing the hub to rotate. The rotational movements of the hub are transferred to a generator, either via a gear arrangement or directly, in the case that the wind turbine is of so-called direct drive type. In the generator, electrical energy is generated, which may be supplied to a power grid.

Wind turbines are becoming ever larger as the demand for renewable energy sources increases globally. With the increase in wind turbine size comes an associated increase in the size and weight of wind turbine components such as tower sections, nacelles, blades and hubs.

It is well know in the field of wind turbine blade erection to use cranes and other mechanical lifting gear to manoeuvre wind turbine component sections into position before they are joined together - typically by bolts. However, it can be difficult to control such lifting gear to ensure that the various components of the wind turbine line up correctly so that they can be bolted together. A wind blade installation system and method are disclosed in KR101324962B1 in which a blade is raised by a lifting device and a wire for connection to a pitch bearing.

It is against this background that the present invention has been developed.

### Summary of the invention

The present invention provides a wind turbine blade installation device for use when installing a wind turbine blade on a wind turbine hub, the wind turbine blade installation device comprising: a winch mechanism supported by a structural frame, wherein the winch mechanism comprises a guide wire and a drum, wherein the winch mechanism is configured so that the guide wire can be wound onto and off the drum in response to a control input; and a mounting device, wherein the mounting device is configured to releasably attach the structural frame to the wind turbine hub so that, in use, one end of the guide wire can be passed through a bolt hole located in a pitch bearing of the wind turbine hub from an innermost side of the pitch bearing to an outermost side of the pitch bearing.

The wind turbine blade installation device is advantageous as it may be temporarily attached to the hub during installation of the wind turbine blade. It may also be moved from one location to another on the hub to facilitate the installation of one or more further blades. Additionally, if the installation device is faulty it may be rapidly removed and replaced with a new device without significant downtime in the blade installation process. Two or more blade installation devices may be used at the same time if desired to provide additional control during wind turbine blade installation.

The structural frame comprises a first portion and a second portion, wherein the first portion of the structural frame is configured to support the drum of the winch assembly, and wherein the second portion of the structural frame is configured to be located adjacent to the pitch bearing in use. This configuration advantageously allows the winch mechanism to be located away from the immediate vicinity of the pitch bearing since it is spaced from the pitch bearing by the second portion of the frame. This allows larger and more powerful winches to be used since the size of the winch mechanism is not necessarily limited by the space available inside the wind turbine hub adjacent the pitch bearing. It also allows for space in the frame to be provided for control electronics, communication devices, etc. which may be located in the less dimensionally constrained first portion of the frame.

The mounting device is configured to releasably attach the second portion of the structural frame to the pitch bearing. By attaching the second portion of the frame to the pitch bearing better control of the position of the installation device relative to the bolt hole can be achieved thereby avoiding potential issues such as chafing of the guide wire on the edge of the bolt hole.

The mounting device may be configured to releasably attach the first portion of the structural frame to a hub casting of the wind turbine hub. The hub casting provides large stable footing for the installation device which may be employed instead of, or in addition to, attachment of the frame to the pitch bearing.

Optionally the second portion of the structural frame may comprise a channel, wherein the wind turbine blade installation device is configured so that, in use, a portion of the guide wire passes along the channel from the drum to the bolt hole. This arrangement may help to ensure guidance of the guide wire through the bolt hole without impingement on the sides of the bolt hole leading to wear of the guide wire or of the bolt hole itself.

The mounting device may optionally comprise one or more magnets. Advantageously, magnets allow the frame to be releasably attached to the hub without damaging the hub components and without needing to provide attachment points such as additional bolt holes or other attachment features. In addition, magnets allow rapid installation and removal of the installation device from the hub.

The wind turbine blade installation device may comprise a load measurement device configured to measure the magnitude of a tensile load in the guide wire in use. It would be time consuming, and therefore expensive, if the guide wire of the installation device were to break. Provision of a load measurement device is therefore advantageous as it allows load in the guide wire to be measured and operation of the winch to be stopped in the even that the load in the guide wire is too high.

Optionally the wind turbine blade installation device comprises: a processor configured to receive an input indicative of the magnitude of a tensile load in the guide wire in use as measured by the load measurement device, and configured to output a control signal in dependence on the magnitude of the tensile load; and a controller configured to receive the control signal from the processor and to control the operation of the winch mechanism in response to the control signal. This arrangement allows control of load in the guide wire to be automated and locally controlled.

The processor may optionally be configured to output a control signal to cause the controller to control the winch mechanism to reel in the guide wire if the magnitude of the tensile load in the guide wire is less than a first predetermined amount. In this way, high loads in the guide wire are avoided as the guide wire is only reeled in when tensile load in the guide wire is below a set amount.

The processor may be configured to output a control signal to cause the controller to control the winch mechanism to pay out the guide wire if the magnitude of the tensile load in the guide wire exceeds a second predetermined amount. In this way, high loads in the guide wire are avoided as the guide wire is actively payed out to reduce tensile load in the guide wire if load in the guide wire have reached above a set amount.

Optionally the processor may be configured to output a control signal to cause the controller to control the winch mechanism to prevent the reeling in and paying out the guide wire if the magnitude of the tensile load in the guide wire is at or between the first predetermined amount and the second predetermined amount. This allows the guide wire to be automatically held at its current position if the tensile load in the guide wire is too high to allow reeling in, but too low to justify paying out.

In another aspect, the present invention provides a wind turbine blade installation arrangement comprising: a wind turbine blade; a guide pin protruding from a root end of the wind turbine blade; a wind turbine hub comprising a hub casting and a pitch bearing; and a wind turbine blade installation device as described above, wherein the wind turbine blade installation device is releasably attached to the wind turbine hub. This wind turbine blade installation arrangement is therefore prepared and ready for the installation of the wind turbine blade in a controlled and efficient manner.

Optionally, a portion of the guide wire extends from the drum through a bolt hole located in the pitch ring to the guide pin, and wherein one end of the guide wire is releasably attached to the guide pin. This arrangement reflects a configuration in which the wind turbine blade has been lifted into position, by a separate lifting cranes or cranes, whereby the root end of the wind turbine blade is in the vicinity of the pitch bearing of the hub ready for guidance by the blade installation device towards the pitch bearing.

In a further aspect, the present invention provides a method of installing a wind turbine blade on a wind turbine hub, the method comprising: releasably attaching a wind turbine blade installation device as described above to a wind turbine hub; passing an end of the guide wire through a bolt hole located in a pitch bearing of the wind turbine hub from an innermost side of the pitch bearing to an outermost side of the pitch bearing; attaching a guide pin to the root end of a wind turbine blade; using lifting equipment to lift the wind turbine blade to a position in which the root end of the wind turbine blade is in the vicinity of the pitch bearing; attaching the end of the guide wire to the guide pin; and operating the winch mechanism to guide the guide pin towards the bolt hole of the pitch bearing. This method provides an efficient way to guide a wind turbine blade to its installation position by using the wind turbine blade installation device described above.

Optionally operating the winch mechanism comprises measuring the magnitude of a tensile load in the guide wire and reeling in the guide wire onto the drum when the magnitude of the tensile load is below a first predetermined amount.

Operating the winch mechanism may optionally comprise measuring the magnitude of a tensile load in the guide wire and paying out the guide wire from the drum when the magnitude of the tensile load is above a second predetermined amount.

Operating the winch mechanism may comprise measuring the magnitude of a tensile load in the guide wire and preventing the guide wire from reeling onto and paying out from the drum when the magnitude of the tensile load is at or between the first predetermined amount and the second predetermined amount.

Optionally the method may comprise: moving a wind turbine blade installation device as described above from a first location on the wind turbine hub proximate a first pitch bearing of the wind turbine hub to a second location on the wind turbine hub proximate a second pitch bearing of the wind turbine hub; releasably attaching the wind turbine blade installation device to the wind turbine hub at the second location; passing an end of the guide wire through a bolt hole located in the second pitch bearing from an innermost side of the second pitch bearing to an outermost side of the second pitch bearing; attaching a guide pin to the root end of a wind turbine blade; using lifting equipment to lift the wind turbine blade to a position in which the root end of the wind turbine blade is in the vicinity of the second pitch bearing; attaching the end of the guide wire to the guide pin; and operating the winch mechanism to guide the guide pin towards the bolt hole of the second pitch bearing. The wind turbine blade installation device may thereby be used to assist with the installation of all of the wind turbine blades on a single hub, or indeed with the installation of wind turbine blades on any number of hubs. Each hub therefore need not be provided with its own blade installation device.

### Brief description of the drawings

The present invention will now be described by way of non-limiting examples with reference to the following drawings, in which:
Figure 1 is a schematic view of a wind turbine;
Figure 2 is a schematic view of a wind turbine blade root end in the vicinity of a wind turbine hub prior to installation; and
Figure 3 is a schematic view of a wind turbine blade installation device in accordance with the present invention attached to the hub of a wind turbine.

### Detailed description

The following detailed description refers to the accompanying drawings that show, by way of illustration, specific details and embodiments in which the invention may be practiced. These embodiments are described in sufficient detail to enable those of ordinary skill in the art to practice the invention. Other embodiments may be utilised, and structural changes may be made without departing from the scope of the invention as defined in the appended claims.

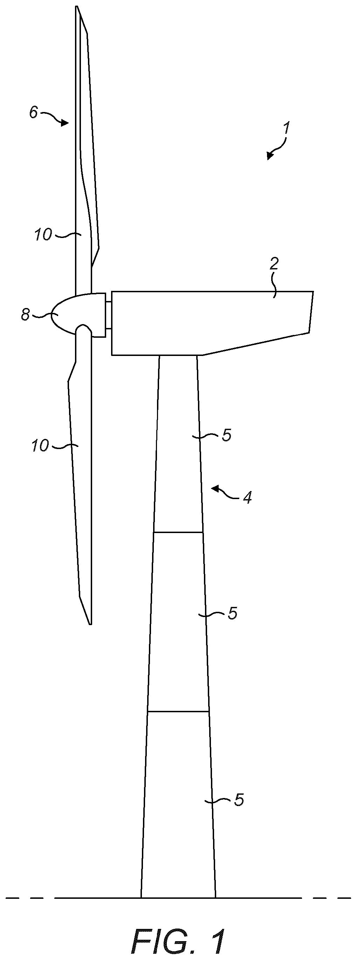

Figure 1 shows a wind turbine 1. The wind turbine 1 includes a nacelle 2 that is supported on a generally vertical tower 4, which is itself comprises a plurality of tower sections 5. The nacelle 2 houses a number of functional components, including a gearbox and a generator (not shown), and supports a main rotor arrangement 6. The main rotor arrangement 6 comprises a hub 8 and a plurality of wind turbine blades 10 connected to the hub 8. In this example, the wind turbine 1 comprises three wind turbine blades 10.

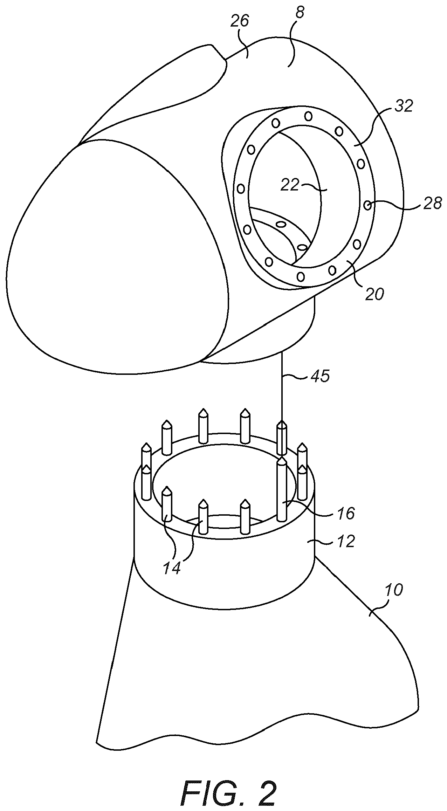

Figure 2 shows a schematic view of the root end 12 of a wind turbine blade 10 prior to installation on a hub 8. In this view, the wind turbine blade 10 has been lifted by one or more cranes (not shown) to a position whereby its root end 12 is in the vicinity of one of the pitch bearings 20 of the hub 8. In this context, "in the vicinity of" means that the root end 12 of the wind turbine blade 10 is close enough to the pitch bearing 20 so that it can be reached by a worker positioned at the pitch bearing 20. In this context, the worker may employ a suitable tool to reach the root end 12 from his or her position at the pitch bearing. It will be understood that, in the context of this disclosure, the root end 12 comprises any stud bolt 14 or any other tool or device attached thereto.

The hub 8 has three pitch bearings 20 corresponding to the three wind turbine blades 10 to be installed on the hub 8. In this view, the pitch bearing 20 onto which the wind turbine blade 10 is to be installed is facing downwards towards the root end 12 of the wind turbine blade 10. Each pitch bearing comprises a plurality of bolt holes 28 which extend from an innermost side 30 of the pitch bearing 20 to an outermost side 32 of the pitch bearing 20.

The pitch bearings 20 are each rotatably mounted on a hub casting 22 of the hub 8. The hub casting 22 and the pitch bearings 20 are surrounded by a spinner cover 26 such that the hub 8 comprises the hub casting 24, the spinner cover 26 and the pitch bearings 20.

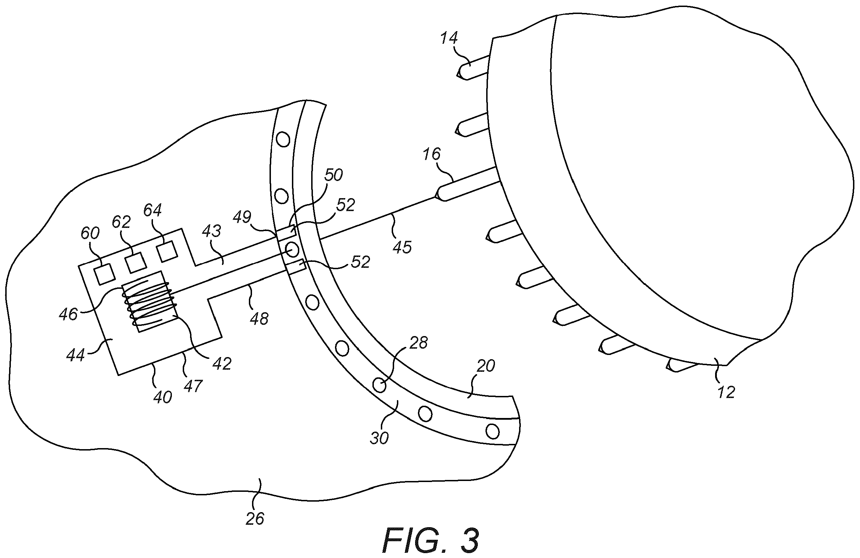

As shown most clearly in Figure 3, the root end 12 of the wind turbine blade 10 comprises a plurality of stud bolts 14 which extend from the root end 12 in a direction substantially parallel to a central axis of rotational symmetry (not shown) of the root end 12. One of the stud bolts 14 is substituted for a guide pin 16 which is longer than the stud bolts 14. The guide pin 16 may for example be 100mm in length. The number of bolt holes 28 in the pitch bearing 20 matches the number of stud bolts 14 plus the guide pin 16.

In order to assist with the guidance of the root end 12 of the wind turbine 10 towards the pitch bearing 20 during installation of the wind turbine blade 10, a wind turbine blade installation device 40 is removably attached to the hub 8 as described in detail below.

The wind turbine blade installation device 40 comprises a winch mechanism 42 supported on a structural frame 44. The winch mechanism 42 comprises a guide wire 45 wound onto a drum 46. The guide wire 45 can be wound onto and off the drum 46 in response to a control input which may be an electronically controlled switch controlled by control electronics located on the winch mechanism 42 itself or located elsewhere. The electronically controlled switch may be remotely operated by wireless communications.

The structural frame 44 of the wind turbine blade installation device 40 comprises a first portion 47 which supports the drum 46 of the winch mechanism 42, and a second portion 48 which extends from the first portion 47 towards the innermost side 30 of the pitch bearing 20 in use. Thus the second portion 48 is located proximate the pitch bearing 20 in use. The second portion 48 of the structural frame 44 defines a channel 43 along which the guide wire 45 passes in use from the drum 46 to the bolt hole 28.

The second portion 48 of the structural frame 44 is temporarily attached to the innermost side 30 of the pitch bearing 20 by a mounting device 50 located at the distal end 49 of the second portion 48 of the structural frame 44. In this example, the mounting device 50 comprises magnets 52 which are arranged so that, in use, they attach the distal end 49 of the second portion 48 of the structural frame 44 to the innermost side 30 of the pitch bearing 20 on either side of one of the bolt holes 28.

In use, the guide wire 45 is wound off the drum 46 and fed through one of the bolt holes 28 in the pitch bearing 20. When the root end 12 of the wind turbine blade 10 is in the vicinity of the pitch bearing 20 to which it is to be attached, a worker attached the free end of the guide wire 45 to the protruding end of the guide pin 16. This connection may be made by any suitable releasable connection fitting and may be effected manually by the worker, or with the help of a tool.

Once the guide wire 16 is connected to the guide pin 16 the slack in the guide wire 45 is taken up by winding the guide wire 45 back onto the drum 46. The one or more cranes (not shown) are then operated to move the root end 12 of the wind turbine blade 10 closer to the pitch bearing 20. As the root end 12 is moved closer to the pitch bearing 12, the winch mechanism 42 is operated so that the guide wire 45 is reeled back onto the drum 46. As the working length of the guide wire 45 decreases, the end of the guide pin 16 to which the guide wire 45 is connected is drawn closer to the bolt hole 28 through which the wire passes. In this way, the root end 12 of the wind turbine blade 10 is guided towards the pitch bearing 20. More specifically, the stud bolts 14 are guided with greater accuracy towards their corresponding bolt holes 28 in the pitch bearing.

The root end 12 of the wind turbine blade 10 is guided by the wind turbine blade installation device 40 until the stud bolts 14 are located in their corresponding bolt holes 28. Once the stud bolts 14 are securely located within the bolt holes 28, the guide pin 16 is detached from the guide wire 45 and the guide pin 16 is replaced by a standard stud bolt 14. The wind turbine blade installation device 40 may be detached from the hub 8 either before or after the guide pin 16 has been removed.

If another wind turbine blade 10 is to be installed on the hub 8, the wind turbine blade installation device 40 is re-attached to the hub at the new installation position with the structural frame 44 of the wind turbine blade installation device 40 now removably attached to the pitch bearing 20 at the new installation position. This process described above is then repeated for the installation of the new wind turbine blade 10 and so on until all of the wind turbine blades 10 have been installed on the hub 8. The wind turbine blade installation device 40 is then removed for storage or use in the installation of wind turbine blades on another hub.

In a preferred embodiment, the wind turbine blade installation device 40 comprises a load measurement device 60 configured to measure the magnitude of a tensile load in the guide wire 45 in use. The wind turbine blade installation device 40 also comprises a processor 62 which is configured to receive an input indicative of the magnitude of a tensile load in the guide wire 45 as measured by the load measurement device 60, and output a control signal to a controller 64 in dependence on the magnitude of the tensile load. The controller 64 is configured to receive the control signal from the processor 62 and to control the operation of the winch mechanism 42 in response to the control signal.

Specifically, the processor 62 is configured to output a control signal to cause the controller 64 to control the winch mechanism 42 to reel in the guide wire 45 if the magnitude of the tensile load in the guide wire 45 is less than a first predetermined amount, and the processor 62 is configured to output a control signal to cause the controller 64 to control the winch mechanism 42 to pay out the guide wire 45 if the magnitude of the tensile load in the guide wire 45 exceeds a second predetermined amount. In this way the guide wire 45 can be controlled so that it reels in only when the tension in the guide wire 45 is below a predetermined threshold, and spools out when the tension in the guide wire 45 is above a second predetermined threshold. By doing this, over tensioning of the guide wire 45 can be avoided thereby avoiding potential damage to the guide wire 45 and other components which may be damaged if the guide wire 45 breaks when under tension thereby releasing the root end 12 of the wind turbine blade 10 with stored potential energy. The thresholds used for the tension in the guide wire 45 may vary between installation sites and local conditions.

The processor 62 may also be configured to output a control signal to cause the controller 64 to control the winch mechanism 42 to prevent the reeling in or paying out the guide wire 45 if the magnitude of the tensile load in the guide wire 45 is at or between the first predetermined amount and the second predetermined amount. In this way, the root end 12 of the wind turbine blade 10 can be kept in the vicinity of the pitch bearing 20 provided that the tension in the guide wire does not exceed the second predetermined threshold.

It will be understood that the processor 62 could be located away from the wind turbine blade installation device 40 and communicate with the load measurement device 60 and the controller 64 via wireless communication means.

If desired, the structural frame 44 of the wind turbine blade installation device 40 could be attached to the hub at another location instead of, or in addition to the pitch bearing. Specifically, the mounting device 50 could comprise additional magnets 52 for attaching the first portion 47 of the structural frame 44 to the hub casting. Furthermore, the mounting device 50 could comprise any suitable releasable mounting device such as bolts, pins or removable adhesive. Furthermore, the structural frame 44 could be releasably attached to the spinner cover 26.

Whilst the above description has been given in the context of one wind turbine blade installation device 40 being used to install a wind turbine blade 10 on a hub 8, it will be appreciated that two or more wind turbine installation devices could be used to install the wind turbine blade 10 with each guidewire 45 passing through a bolt hole 28 and attaching to a guide pin 16.

It will also be appreciated that the wind turbine blade 10 to be installed on the hub 8 may be in any orientation with respect to the ground during installation, supported by the one or more cranes. In particular, the wind turbine blade 10 may be substantially horizontal during installation.

## Claims

1. A wind turbine blade installation device (40) for use when installing a wind turbine blade (10) on a wind turbine hub (8), the wind turbine blade installation device (40) comprising:
a winch mechanism (42) supported by a structural frame (44) and an electronically controlled switch to control the winch mechanism, wherein the winch mechanism (42) comprises a guide wire (45) and a drum (46), wherein the winch mechanism (42) is configured so that the guide wire (45) can be wound onto and off the drum (46) in response to a control input from said switch; and
a mounting device (50), wherein the mounting device (50) is configured to releasably attach the structural frame (44) to the wind turbine hub (8) so that, in use, one end of the guide wire (45) can be passed through a bolt hole (28) located in a pitch bearing (20) of the wind turbine hub (8) from an innermost side (30) of the pitch bearing (20) to an outermost side (32) of the pitch bearing (20) , wherein the structural frame (44) comprises a first portion (47) and a second portion (48), wherein the first portion (47) of the structural frame (44) is configured to support the drum (46) of the winch assembly (42), and wherein the second portion (48) of the structural frame (44) is configured to be located adjacent to the pitch bearing (20) in use, wherein the mounting device (50) is configured to releasably attach the second portion (48) of the structural frame (44) to the pitch bearing (20).

2. A wind turbine blade installation device (40) as claimed in claim 1, wherein the mounting device (50) is configured to releasably attach the first portion (47) of the structural frame (44) to a hub casting (22) of the wind turbine hub (8).

3. A wind turbine blade installation device (40) as claimed in any preceding claim, comprising a load measurement device (60) configured to measure the magnitude of a tensile load in the guide wire (45) in use.

4. A wind turbine blade installation device (40) as claimed in claim 3, comprising:
a processor (62) configured to receive an input indicative of the magnitude of a tensile load in the guide wire (45) in use as measured by the load measurement device (60), and configured to output a control signal in dependence on the magnitude of the tensile load; and
a controller (64) configured to receive the control signal from the processor (62) and to control the operation of the winch mechanism (42) in response to the control signal.

5. A wind turbine blade installation device (40) as claimed in claim 4, wherein the processor (62) is configured to output a control signal to cause the controller (64) to control the winch mechanism (42) to reel in the guide wire (45) if the magnitude of the tensile load in the guide wire (45) is less than a first predetermined amount.

6. A wind turbine blade installation device (40) as claimed in claim 5, wherein the processor (62) is configured to output a control signal to cause the controller (64) to control the winch mechanism (42) to pay out the guide wire (45) if the magnitude of the tensile load in the guide wire (45) exceeds a second predetermined amount.

7. A wind turbine blade installation device (40) as claimed in claim 6, wherein the processor (62) is configured to output a control signal to cause the controller (64) to control the winch mechanism (42) to prevent the reeling in and paying out the guide wire (45) if the magnitude of the tensile load in the guide wire (45) is at or between the first predetermined amount and the second predetermined amount.

8. A wind turbine blade installation arrangement comprising:
a wind turbine blade (10);
a guide pin (16) protruding from a root end (12) of the wind turbine blade (10);
a wind turbine hub (8) comprising a hub casting (22) and a pitch bearing (20); and
a wind turbine blade installation device (40) according to any one of claims 1 to 7, wherein the wind turbine blade installation device (40) is releasably attached to the wind turbine hub (8).

9. A wind turbine blade installation arrangement as claimed in claim 8, wherein a portion of the guide wire (45) extends from the drum (46) through a bolt hole (28) located in the pitch ring (20) to the guide pin (16), and wherein one end of the guide wire (45) is releasably attached to the guide pin (16).

10. A method of installing a wind turbine blade (10) on a wind turbine hub (8), the method comprising:
releasably attaching a wind turbine blade installation device (40) as claimed in any one of claims 1 to 7 to a wind turbine hub (8);
passing an end of the guide wire (45) through a bolt hole (28) located in a pitch bearing (20) of the wind turbine hub (8) from an innermost side (30) of the pitch bearing (20) to an outermost side (32) of the pitch bearing (20);
attaching a guide pin (16) to the root end (12) of a wind turbine blade (10);
using lifting equipment to lift the wind turbine blade (10) to a position in which the root end (12) of the wind turbine blade (10) is in the vicinity of the pitch bearing (20);
attaching the end of the guide wire (45) to the guide pin (16); and
operating the winch mechanism (42) to guide the guide pin (16) towards the bolt hole (28) of the pitch bearing (20).

11. A method of installing a wind turbine blade (10) on a wind turbine hub (8) as claimed in claim 10, wherein operating the winch mechanism (42) comprises measuring the magnitude of a tensile load in the guide wire (45) and reeling in the guide wire (45) onto the drum (46) when the magnitude of the tensile load is below a first predetermined amount.

12. A method of installing a wind turbine blade (10) on a wind turbine hub (8) as claimed in claim 11, wherein operating the winch mechanism (42) comprises measuring the magnitude of a tensile load in the guide wire (45) and paying out the guide wire (45) from the drum (46) when the magnitude of the tensile load is above a second predetermined amount.

13. A method of installing a wind turbine blade (10) on a wind turbine hub (8) as claimed in claim 12, wherein operating the winch mechanism (42) comprises measuring the magnitude of a tensile load in the guide wire (45) and preventing the guide wire (45) from reeling onto and paying out from the drum (46) when the magnitude of the tensile load is at or between the first predetermined amount and the second predetermined amount.

## Patentansprüche

1. Windkraftanlagenblattinstallationsvorrichtung (40) zur Verwendung beim Installieren eines Windkraftanlagenblatts (10) an einer Windkraftanlagenabe (8), wobei die Windkraftanlagenblattinstallationsvorrichtung (40) Folgendes umfasst:
einen Windenmechanismus (42), der von einem Strukturrahmen (44) gestützt wird, und einen elektronisch gesteuerten Schalter, um den Windenmechanismus zu steuern, wobei der Windenmechanismus (42) ein Führungskabel (45) und eine Trommel (46) umfasst, wobei der Windenmechanismus (42) derart ausgelegt ist, dass das Führungskabel (45) in Reaktion auf eine Steuereingabe von dem Schalter auf die und von der Trommel (46) gewickelt werden kann; und
eine Montagevorrichtung (50), wobei die Montagevorrichtung (50) dazu ausgelegt ist, den Strukturrahmen (44) lösbar an der Windkraftanlagenabe (8) zu befestigen, so dass, in Verwendung, ein Ende des Führungskabels (45) durch ein Bolzenloch (28), das in einem Anstellwinkellager (20) der Windkraftanlagenabe (8) liegt, von einer innersten Seite (30) des Anstellwinkellagers (20) zu einer äußersten Seite (32) des Anstellwinkellagers (20) durchgeführt werden kann, wobei der Strukturrahmen (44) einen ersten Abschnitt (47) und einen zweiten Abschnitt (48) umfasst, wobei der erste Abschnitt (47) des Strukturrahmens (44) dazu ausgelegt ist, die Trommel (46) der Windenbaugruppe (42) zu stützen und wobei der zweite Abschnitt (48) des Strukturrahmens (44) dazu ausgelegt ist, angrenzend an das Anstellwinkellager (20) in Verwendung zu liegen, wobei die Montagevorrichtung (50) dazu ausgelegt ist, den zweiten Abschnitt (48) des Strukturrahmens (44) lösbar an dem Anstellwinkellager (20) zu befestigen.

2. Windkraftanlagenblattinstallationsvorrichtung (40) nach Anspruch 1, wobei die Montagevorrichtung (50) dazu ausgelegt ist, den ersten Abschnitt (47) des Strukturrahmens (44) lösbar an einem Nabengussteil (22) der Windkraftanlagenabe (8) zu befestigen.

3. Windkraftanlagenblattinstallationsvorrichtung (40) nach einem vorstehenden Anspruch, umfassend eine Lastmessungsvorrichtung (60), die dazu ausgelegt ist, die Größe einer Zuglast in dem Führungskabel (45) in Verwendung zu messen.

4. Windkraftanlagenblattinstallationsvorrichtung (40) nach Anspruch 3, umfassend:
einen Prozessor (62), der dazu ausgelegt ist, eine Eingabe zu empfangen, die die Größe einer Zuglast in dem Führungskabel (45) in Verwendung angibt, wie sie von der Lastmessungsvorrichtung (60) gemessen wird, und dazu ausgelegt ist, ein Steuersignal abhängig von der Größe der Zuglast auszugeben; und
eine Steuereinheit (64), die dazu ausgelegt ist, das Steuersignal von dem Prozessor (62) zu empfangen und den Betrieb des Windenmechanismus (42) in Reaktion auf das Steuersignal zu steuern.

5. Windkraftanlagenblattinstallationsvorrichtung (40) nach Anspruch 4, wobei der Prozessor (62) dazu ausgelegt ist, ein Steuersignal auszugeben, um die Steuereinheit (64) zu veranlassen, den Windenmechanismus (42) zu steuern, das Führungskabel (45) einzuholen, falls die Größe der Zuglast in dem Führungskabel (45) geringer als ein erstes vorgegebenes Ausmaß ist.

6. Windkraftanlagenblattinstallationsvorrichtung (40) nach Anspruch 5, wobei der Prozessor (62) dazu ausgelegt ist, ein Steuersignal auszugeben, um die Steuereinheit (64) zu veranlassen, den Windenmechanismus (42) zu steuern, das Führungskabel (45) ablaufen zu lassen, falls die Größe der Zuglast in dem Führungskabel (45) ein zweites vorgegebenes Ausmaß übersteigt.

7. Windkraftanlagenblattinstallationsvorrichtung (40) nach Anspruch 6, wobei der Prozessor (62) dazu ausgelegt ist, ein Steuersignal auszugeben, um die Steuereinheit (64) zu veranlassen, den Windenmechanismus (42) zu steuern, das Einholen und Ablaufenlassen des Führungskabels (45) zu verhindern, falls die Größe der Zuglast in dem Führungskabel (45) bei oder zwischen dem ersten vorgegebenen Ausmaß und dem zweiten vorgegebenen Ausmaß ist.

8. Windkraftanlagenblattinstallationsanordnung, umfassend:
ein Windkraftanlagenblatt (10);
einen Führungsstift (16), der von einem Wurzelende (12) des Windkraftanlagenblatts (10) vorsteht;
eine Windkraftanlagenabe (8), die eine Nabengussform (22) und ein Anstellwinkellager (20) umfasst; und
eine Windkraftanlagenblattinstallationsvorrichtung (40) nach einem der Ansprüche 1 bis 7, wobei die Windkraftanlagenblattinstallationsvorrichtung (40) lösbar an der Windkraftanlagenabe (8) befestigt ist.

9. Windkraftanlagenblattinstallationsanordnung nach Anspruch 8, wobei ein Abschnitt des Führungskabels (45) sich von der Trommel (46) durch ein Bolzenloch (28), das in dem Anstellwinkelring (20) liegt, zu dem Führungsstift (16) erstreckt und wobei ein Ende des Führungskabels (45) lösbar an dem Führungsstift (16) befestigt ist.

10. Verfahren zum Installieren eines Windkraftanlagenblatts (10) an einer Windkraftanlagenabe (8), das Verfahren umfassend:
lösbares Befestigen einer Windkraftanlagenblattinstallationsvorrichtung (40) nach einem der Ansprüche 1 bis 7 an einer Windkraftanlagenabe (8);
Durchführen eines Endes des Führungskabels (45) durch ein Bolzenloch (28), das in einem Anstellwinkellager (20) der Windkraftanlagenabe (8) liegt, von einer innersten Seite (30) des Anstellwinkellagers (20) zu einer äußersten Seite (32) des Anstellwinkellagers (20);
Befestigen eines Führungsstifts (16) an dem Wurzelende (12) eines Windkraftanlagenblatts (10);
Verwenden von Hebeausrüstung, um das Windkraftanlagenblatt (10) zu einer Position zu heben, bei der das Wurzelende (12) des Windkraftanlagenblatts (10) in der Nähe des Anstellwinkellagers (20) ist;
Befestigen des Endes des Führungskabels (45) an dem Führungsstift (16); und
Betreiben des Windenmechanismus (42), um den Führungsstift (16) zu dem Bolzenloch (28) des Anstellwinkellagers (20) zu führen.

11. Verfahren zum Installieren eines Windkraftanlagenblatts (10) an einer Windkraftanlagenabe (8) nach Anspruch 10, wobei Betreiben des Windenmechanismus (42) umfasst, die Größe einer Zuglast in dem Führungskabel (45) zu messen und das Führungskabel (45) auf die Trommel (46) einzuholen, wenn die Größe der Zuglast unter einem ersten vorgegebenen Ausmaß ist.

12. Verfahren zum Installieren eines Windkraftanlagenblatts (10) an einer Windkraftanlagenabe (8) nach Anspruch 11, wobei Betreiben des Windenmechanismus (42) umfasst, die Größe einer Zuglast in dem Führungskabel (45) zu messen und das Führungskabel (45) von der Trommel (46) ablaufen zu lassen, wenn die Größe der Zuglast über einem zweiten vorgegebenen Ausmaß ist.

13. Verfahren zum Installieren eines Windkraftanlagenblatts (10) an einer Windkraftanlagenabe (8) nach Anspruch 12, wobei Betreiben des Windenmechanismus (42) umfasst, die Größe einer Zuglast in dem Führungskabel (45) zu messen und das Führungskabel (45) daran zu hindern, auf die Trommel (46) eingeholt zu werden oder von dieser abzulaufen, wenn die Größe der Zuglast bei oder zwischen dem ersten vorgegebenen Ausmaß und dem zweiten vorgegebenen Ausmaß ist.

## Revendications

1. Dispositif d'installation de pales d'éoliennes (40) destiné à être utilisé lors de l'installation d'une pale d'éolienne (10) sur un moyeu d'éolienne (8), le dispositif d'installation de pales d'éolienne (40) comprenant :
un mécanisme de treuil (42) soutenu par un cadre structurel (44) et un commutateur commandé électroniquement pour commander le mécanisme de treuil, dans lequel le mécanisme de treuil (42) comprend un câble de guidage (45) et un tambour (46), dans lequel le mécanisme de treuil (42) est configuré de sorte que le câble de guidage (45) peut être enroulé sur et déroulé du tambour (46) en réponse à une entrée de commande dudit commutateur ; et
un dispositif de montage (50), dans lequel le dispositif de montage (50) est configuré pour fixer de manière amovible le cadre structurel (44) au moyeu d'éolienne (8) de sorte que, lors de son utilisation, une extrémité du câble de guidage (45) peut être passée à travers un trou de boulon (28) situé dans un palier de pas (20) du moyeu d'éolienne (8) depuis un côté le plus à l'intérieur (30) du palier de pas (20) vers un côté le plus à l'extérieur (32) du palier de pas (20), dans lequel le cadre structurel (44) comprend une première partie (47) et une seconde partie (48), dans lequel la première partie (47) du cadre structurel (44) est configurée pour soutenir le tambour (46) de l'ensemble de treuil (42), et dans lequel la seconde partie (48) du cadre structurel (44) est configurée pour être placée de manière adjacente au palier de pas (20) lors de son utilisation, dans lequel le dispositif de montage (50) est configuré pour fixer de manière amovible la seconde partie (48) du cadre structurel (44) au palier de pas (20).

2. Dispositif d'installation de pales d'éolienne (40) selon la revendication 1, dans lequel le dispositif de montage (50) est configuré pour fixer de manière amovible la première partie (47) du cadre structurel (44) à un moulage de moyeu (22) du moyeu d'éolienne (8).

3. Dispositif d'installation de pales d'éolienne (40) selon l'une quelconque des revendications précédentes, comprenant un dispositif de mesure de la charge (60) configuré pour mesurer l'amplitude d'une charge de traction dans le câble de guidage (45) lors de son utilisation.

4. Dispositif d'installation de pales d'éolienne (40) selon la revendication 3, comprenant :
un processeur (62) configuré pour recevoir une entrée indiquant l'amplitude d'une charge de traction dans le câble de guidage (45) lors de son utilisation telle que mesurée par le dispositif de mesure de la charge (60), et configuré pour émettre un signal de commande en fonction de l'amplitude de la charge de traction ; et
un dispositif de commande (64) configuré pour recevoir le signal de commande du processeur (62) et pour commander le fonctionnement du mécanisme de treuil (42) en réponse au signal de commande.

5. Dispositif d'installation de pales d'éolienne (40) selon la revendication 4, dans lequel le processeur (62) est configuré pour émettre un signal de commande pour amener le dispositif de commande (64) à commander le mécanisme de treuil (42) à enrouler le câble de guidage (45) si l'amplitude de la charge de traction dans le câble de guidage (45) est inférieure à une première quantité prédéterminée.

6. Dispositif d'installation de pales d'éolienne (40) selon la revendication 5, dans lequel le processeur (62) est configuré pour émettre un signal de commande pour amener le dispositif de commande (64) à commander le mécanisme de treuil (42) à dérouler le câble de guidage (45) si l'amplitude de la charge de traction dans le câble de guidage (45) dépasse une seconde quantité prédéterminée.

7. Dispositif d'installation de pales d'éolienne (40) selon la revendication 6, dans lequel le processeur (62) est configuré pour émettre un signal de commande pour amener le dispositif de commande (64) à commander le mécanisme de treuil (42) à empêcher l'enroulement et le déroulement du câble de guidage (45) si l'amplitude de la charge de traction dans le câble de guidage (45) se situe à ou entre la première quantité prédéterminée et la seconde quantité prédéterminée.

8. Agencement d'installation de pales d'éolienne comprenant :
une pale d'éolienne (10) ;
une tige de guidage (16) faisant saillie depuis une extrémité de base (12) de la pale d'éolienne (10) ;
un moyeu d'éolienne (8) comprenant un moulage de moyeu (22) et un palier de calage (20) ; et
un dispositif d'installation de pales d'éolienne (40) selon l'une quelconque des revendications 1 à 7, dans lequel le dispositif d'installation de pales d'éolienne (40) est fixé de manière amovible au moyeu d'éolienne (8).

9. Agencement d'installation de pales d'éolienne selon la revendication 8, dans lequel une partie du câble de guidage (45) s'étend depuis le tambour (46) à travers un trou de boulon (28) situé dans la bague de pas (20) vers la tige de guidage (16), et dans lequel une extrémité du câble de guidage (45) est fixée de manière amovible à la tige de guidage (16).

10. Procédé d'installation d'une pale d'éolienne (10) sur un moyeu d'éolienne (8), le procédé comprenant :
la fixation de manière amovible d'un dispositif d'installation de pales d'éolienne (40) selon l'une quelconque des revendications 1 à 7 à un moyeu d'éolienne (8) ;
le passage d'une extrémité du câble de guidage (45) à travers un trou de boulon (28) situé dans un palier de calage (20) du moyeu d'éolienne (8) depuis un côté le plus à l'intérieur (30) du palier de calage (20) vers un côté le plus à l'extérieur (32) du palier de calage (20) ;
la fixation d'une tige de guidage (16) à l'extrémité de base (12) d'une pale d'éolienne (10) ;
l'utilisation d'un équipement de levage pour soulever la pale d'éolienne (10) jusqu'à une position dans laquelle l'extrémité de base (12) de la pale d'éolienne (10) est à proximité du palier de calage (20) ;
la fixation de l'extrémité du câble de guidage (45) à la tige de guidage (16) ; et
le fonctionnement du mécanisme de treuil (42) pour guider la tige de guidage (16) en direction du trou de boulon (28) du palier de calage (20).

11. Procédé d'installation d'une pale d'éolienne (10) sur un moyeu d'éolienne (8) selon la revendication 10, dans lequel le fonctionnement du mécanisme de treuil (42) comprend la mesure de l'amplitude d'une charge de traction dans le câble de guidage (45) et l'enroulement du câble de guidage (45) sur le tambour (46) lorsque l'amplitude de la charge de traction est inférieure à une première quantité prédéterminée.

12. Procédé d'installation d'une pale d'éolienne (10) sur un moyeu d'éolienne (8) selon la revendication 11, dans lequel le fonctionnement du mécanisme de treuil (42) comprend la mesure de l'amplitude d'une charge de traction dans le câble de guidage (45) et le déroulement du câble de guidage (45) du tambour (46) lorsque l'amplitude de la charge de traction est supérieure à une seconde quantité prédéterminée.

13. Procédé d'installation d'une pale d'éolienne (10) sur un moyeu d'éolienne (8) selon la revendication 12, dans lequel le fonctionnement du mécanisme de treuil (42) comprend la mesure de l'amplitude d'une charge de traction dans le câble de guidage (45) et la prévention du câble de guidage (45) de s'enrouler sur et se dérouler du tambour (46) lorsque l'amplitude de la charge de traction se situe à ou entre la première quantité prédéterminée et la seconde quantité prédéterminée.
